# EUROPÄISCHE PATENTSCHRIFT

(11) **EP 1 782 546 B1**
(45) Veröffentlichungstag und Bekanntmachung des Hinweises auf die Patenterteilung: **08.10.2008**
(21) Anmeldenummer: 05769864.9
(22) Anmeldetag: 02.08.2005
(51) Int. Cl.: H04B 1/40

(54) **BASISBANDCHIP, KOMMUNIKATIONSMODUL, LEITERPLATTE MIT PERIPHERIEGERÄTEN UND VERFAHREN ZUR ANSTEUERUNG SOLCHER PERIPHERIEGERÄTE**
BASEBAND CHIP, COMMUNICATION MODULE, PRINTED CIRCUIT BOARD COMPRISING PERIPHERAL DEVICES AND METHOD FOR CONTROLLING SAID TYPE OF PERIPHERAL DEVICES
PUCE BANDE DE BASE, MODULE DE COMMUNICATION, CARTE DE CIRCUITS COMPORTANT DES APPAREILS PERIPHERIQUES ET PROCEDE POUR COMMANDER CES DERNIERS

(30) Priorität: 24.08.2004 DE 102004041805
(43) Veröffentlichungstag der Anmeldung: 09.05.2007
(73) Patentinhaber: SIEMENS AKTIENGESELLSCHAFT, 80333 München (DE)
(72) Erfinder: SCHRÖTER, Hartmut, 14656 Brieselang (DE)
(86) Internationale Anmeldenummer: PCT/EP2005/053757
(87) Internationale Veröffentlichungsnummer: WO 2006/021481

(56) Entgegenhaltungen:
- GB-A- 2 396 273
- US-A- 5 892 972
- US-A1- 2002 049 042
- US-A1- 2004 017 219

## Beschreibung

Die Erfindung betrifft einen Basisbandchip, umfassend einen Basisbandchipkern und mit dem Basisbandchipkern verbundene Peripherieunterstützungseinheiten für Peripheriegeräte, wobei der Basisbandchipkern über eine Schnittstellenleitung mit einem externen Steuergerät verbindbar ist. Des weiteren betrifft die Erfindung ein Kommunikationsmodul bzw. eine Leiterplatte mit einem solchen Basisbandchip und ein Verfahren zur Ansteuerung von Peripheriegeräten durch ein Steuergerät, wobei das Steuergerät über eine Schnittstellenleitung mit einem Basisbandchipkern verbunden ist, wobei der Basisbandchipkern auf einem Basisbandchip mit Peripherieunterstützungseinheiten verbunden ist und wobei Peripheriegeräte über Datenleitungen mit den zugeordneten Peripherieunterstützungseinheiten verbunden sind.

Es ist bekannt, dass der Produktionsprozess von Mobiltelefonen, beispielsweise solchen, die den GSM / GPRS Standard unterstützen, in verschiedenen Schritten erfolgt, an denen auch mehrere Hersteller beteiligt sein können. Grundlage für die Herstellung von Mobiltelefonen ist der so genannte Basisbandchip. Dieser Basisbandchip besteht aus einem Basisbandchipkern der aus verschiedenen zusammenwirkenden Einheiten beispielsweise Prozessoren, Speichern und Controllern zusammengesetzt ist und anderen Einheiten zur Unterstützung anschließbarer Peripheriegeräte. Diese so genannten Peripherieunterstützungseinheiten ermöglichen, den Anschluss verschiedener Peripheriegeräte, wie beispielsweise Anzeigeeinheiten (farbig), Spracherkennungssysteme, Sprachaufzeichnungsgeräte, MP3-Abspielgeräte, MPEG-4-Decoder, Universal Serial Bus Geräte, Digitalkameras und Speicherkarten, wie SD-Karten, Multimediakarten, Memory Sticks etc..

Aus der GB-A-2396273 ist ein Basisbandchip (10) bekannt, der über eine Schnittstellenleitung (Interface) mit einem externen Steuergerät (600) verbindbar ist.

Der Basisbandchip wird mit einem passenden zumeist ebenfalls als Chip ausgebildeten Sendeempfänger und in der Regel einer Antenne sowie weiteren passiven Bauelementen (Kondensatoren, Widerständen etc.) auf eine Leiterplatte aufgebracht. Die vom Basisbandchip verarbeiteten Daten können so über einen auf die Leiterplatte aufgebrachten Sendeempfänger versendet werden. Ebenfalls können vom Sendeempfänger empfangene Daten vom Basisbandchip verarbeitet und angeschlossenen Peripheriegeräten zugeführt werden.

Diese auf einer Leiterplatte aufgebrachte beschriebene Einheit aus Basisbandchip, Sendeempfänger und gegebenenfalls Antenne sowie weiteren passiven Bauelementen wird auch als Kommunikationsmodul bezeichnet.

Diese Kommunikationsmodule werden als Einheiten separat verkauft. Die Kommunikationsmodule sind für verschiedene Funkstandards z. B. GSM, GPRS, EDGE, DECT, WLAN, Bluetooth etc. ausgelegt.

Ein weiterer Hersteller, der so genannte Modulintegrator, erweitert das Kommunikationsmodul für verschiedene Anwendungen z.B. für den Einsatz in Mobiltelefonen, in Modems, in PCMCIA-Steckkarten etc.

Soll ein Kommunikationsmodul zu einem Mobiltelefon erweitert werden, so muss der Modulintegrator beispielsweise eine Anzeigeeinheit an ein Steuergerät anschließen. Der Modulintegrator muss eigene Programme zur Öffnung eines Datenkanals zur Anzeigeeinheit erstellen. Bei geöffnetem Datenkanal werden weitere Programme in einem Speicher des Steuergeräts hinterlegt, um beispielsweise zu regeln, in welcher Reihenfolge die einzelnen Bildpunkte der Anzeigeeinheit angesteuert werden, welche Zeichengarnitur auf der Anzeigeeinheit verwendet werden soll oder welche Datenübertragungsrate zum Bildaufbau auf der Anzeigeeinheit verwendet werden soll.

Soll ein zweites Peripheriegerät beispielsweise eine Speicherkarte (SD Karte) an das Kommunikationsmodul angeschlossen werden, muss der Modulintegrator ähnliche Maßnahmen wie hinsichtlich der Anzeigeeinheit beschrieben, vollziehen. Insbesondere ist die Erstellung eines weiteren Programms zur Öffnung des Datenkanals zur Speicherkarte und eines weiteren Programms zur Regelung der Datenkommunikation zwischen Steuergerät und Speicherkarte erforderlich.

Es ist des weiteren bekannt, dass Endgeräte wie Mobiltelefone oder Kommunikationsmodule oder Modems über eine so genannte AT Kommandoschnittstelle verfügen, über die diese Endgeräte von einem an das Endgerät angeschlossenen Steuergerät wie einem Rechner (PC, Notebook) mittels festgelegter AT Kommandos gesteuert werden können.

Es ist deshalb die Aufgabe der vorliegenden Erfindung eine technische Lösung für einen Basisbandchip und ein Verfahren der eingangs genannten Art anzugeben, mit der der Anschluss von Peripheriegeräten an den Basisbandchip in einfacher und flexibler Weise ermöglicht wird.

Die Aufgabe wird den Basisbandchip betreffend erfindungsgemäß dadurch gelöst, dass der Basisbandchip zusätzlich mit einem Basisbandchipkernmultiplexer verbunden ist, wobei der Basisbandchipkern über den Basisbandchipkernmultiplexer über die Schnittstellenleitung mit dem Steuergerät verbindbar ist, und die Aufgabe wird das Verfahren betreffend erfindungsgemäß dadurch gelöst, dass zwischen den Peripheriegeräten und dem Steuergerät ein Datenkanal mittels AT Kommandos gebildet wird, wodurch das Steuergerät unmittelbaren Zugriff auf die Peripheriegeräte erhält.

Dadurch können zwischen sämtlichen angeschlossenen Peripheriegeräten und dem Steuergerät, Datenkanäle vom Steuergerät mittels einer einheitlichen Kommandosprache wie der AT Kommandosprache geöffnet bzw. geschlossen werden. Das hat den Vorteil, dass verschiedene Peripheriegeräte an verschiedene Datenleitungen (Datenbusse) angeschlossen werden können, wobei die Datenbusse selbst ebenfalls beispielsweise über AT-Kommandos geöffnet bzw. geschlossen werden. Auf die Erstellung von zusätzlichen Programmen zur Öffnung bzw. dem Schließen von Datenkanälen zu den Peripheriegeräten bzw. den Einsatz zusätzlicher Peripheriecontroller kann verzichtet werden. Weiterbildungen der Erfindung ergeben sich aus den Unteransprüchen.

In vorteilhafter Weise wird der Basisbandchipkernmultiplexer von dem Basisbandchipkern umfasst, wodurch beide Bestandteile in einem einzigen Bauteil zusammengefasst sind.

Dadurch, dass der Basisbandchip derart ausgebildet ist, dass eine Vielzahl von logischen Datenkanälen zwischen einem Steuergerätmultiplexer und verbundenen Peripheriegeräten mittels AT Kommandos bildbar sind, kann ein flexibler und damit kostengünstiger Zugriff vom Steuergerät auf die angeschlossenen Peripheriegeräte realisiert werden.

Verschiedene Verbindungen zu den angeschlossenen Peripheriegeräten sind als Serial Peripherical Interface Bus oder I2C Bus ausgebildet. Dadurch können die vertrauten Eigenschaften dieser Bussysteme zur Ansteuerung von Peripheriegeräten genutzt werden. Diese Bussysteme sind selbst über AT Kommandos ansteuerbar.

Zwei vorteilhafte Ausbildungen von anzusteuernden Peripheriegeräten sind eine Anzeigeeinheit und SD Memory Cards (Speicherkarten). Diese Peripheriegeräte sind beim Einsatz eines Basisbandchips für die Anwendung in Mobiltelefonen anzuschließen.

In vorteilhafter Weise umfasst eine Leiterplatte sowohl das Kommunikationsmodul als auch Peripheriegeräte, wodurch ein hoher Integrationsgrad erreichbar ist.

In einer vorteilhaften Weiterbildung des oben genannten Verfahrens ist der Basisbandchipkern mit einem Basisbandchipkernmultiplexer verbunden und der Basisbandchipkernmultiplexer wird über die Schnittstellenleitung mit einem Steuergerätmultiplexer verbunden, wobei der Steuergerätmultiplexer mit dem Steuergerät verbunden ist. Durch den Einsatz der beiden Multiplexer sind alle Peripheriegeräte flexibel und kostengünstig vom Steuergerät ansteuerbar.

In einer weiteren vorteilhaften Weiterbildung des Verfahrens wird diese Flexibilität und Wirtschaftlichkeit durch die Bildung einer Vielzahl von logischen Datenkanälen mittels AT Kommandos zwischen dem Steuergerätmultiplexer und verbundenen Peripheriegeräten über die Schnittstellenleitung verbessert.

In einer weiteren vorteilhaften Weiterbildung des Verfahrens werden die zwischen dem Steuergerät und dem Basisbandchipkern übertragenen Daten in Datenrahmen übertragen. Damit lassen sich in der ETSI GSM Spezifikation 07.10 offenbarte Datenübertragungsprotokolle in der Erfindung anwenden.

In einer weiteren vorteilhaften Weiterbildung des Verfahrens umfasst der Datenrahmen ein Datenfeld, welches die übertragenen Daten als Peripheriedaten kennzeichnet. Dieses ist ein alternatives Verfahren zur Trennung von Nutzdaten und AT Kommandos im Steuergerätmultiplexer bzw. Basisbandchipkernmultiplexer bei der Übertragung von Daten zwischen dem Steuergerät und den Peripheriegeräten.

Weitere Vorteile der Erfindung ergeben sich aus der folgenden Beschreibung, welche in Verbindung mit der beigefügten Zeichnung die Erfindung an Hand von einem Ausführungsbeispiel erläutert.

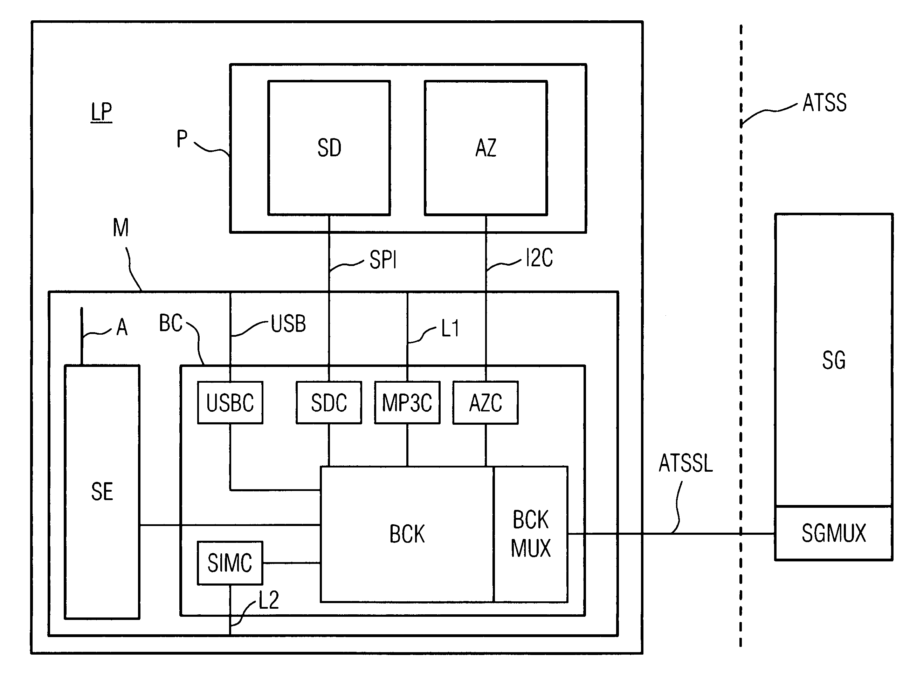

Dabei zeigt in schematischer Darstellung die
FIG 1 einen erfindungsgemäßen Basisbandchip, der mit Peripheriegeräten, einem Sendeempfänger und über eine Schnittstellenleitung mit einem Steuergerät verbunden ist.

Die Figur 1 zeigt einen erfindungsgemäßen Basisbandchip BC, der einen Basisbandchipkern BCK und mehrere mit dem Basisbandchipkern BCK verbundene Peripherieunterstützungseinheiten USBC, SDC, MP3C, AZC, SIMC umfasst. Der Basisbandchipkern BCK umfasst seinerseits einen Basisbandchipkernmultiplexer BCKMUX. Basisbandchipkern BCK und Basisbandchipkernmultiplexer BCKMUX könnten allerdings auch als zwei verbundene separate Einheiten ausgebildet sein (nicht dargestellt).

Der Basisbandchipkern BCK umfasst ein oder mehrere in bekannter Weise zusammenwirkende Prozessoren, Speicher und Controller.

Die Peripherieunterstützungseinheiten USBC, SDC, MP3C, AZC, SIMC sind im Ausführungsbeispiel als Einheiten für ein Universal Serial Bus Gerät USBC, eine SD Speicherkarte SDC, ein MP3-Abspielgerät MP3C, eine Anzeigeeinheit AZC und eine auch als SIM-Karte bekanntes Subscriber Identity Module SIMC, ausgebildet.

An die Peripherieunterstützungseinheit SIMC ist eine Datenleitung L2 zum Anschluss eines Subscriber Identity Modules, an die Peripherieunterstützungseinheit USBC ist ein USB Datenbus zum Anschluss eines USB Gerätes und an die Peripherieunterstützungseinheit MP3C ist eine Datenleitung L1 zum Anschluss eines MP3 Abspielgerätes vorgesehen.

An der Peripherieunterstützungseinheit SDC ist als Datenleitung ein als Serial Peripherical Interface bekannter Bus SPI angeschlossen, an dem wiederum eine als Peripheriegerät P ausgebildete Speicherkarte SD angeschlossen ist.

An der Peripherieunterstützungseinheit AZC ist als Datenleitung ein als I2C bekannter Bus I2C angeschlossen, an dem wiederum eine als Peripheriegerät P ausgebildete Anzeigeeinheit AZ angeschlossen ist.

Des Weiteren ist der Basisbandchipkern BCK mit einem Sendeempfänger SE verbunden, der seinerseits mit einer Antenne A verbunden ist. Der Sendeempfänger SE ist nicht Teil des Basisbandchips BC. Sendeempfänger SE, Basisbandchip BC und weitere passive, hier nicht gezeigte Bauelemente sind auf einer Leiterplatte LP angeordnet und bilden das Kommunikationsmodul M, welches zusammen mit der Antenne A zur Übertragung von Daten, die von dem Basisbandchipkern BCK zugeführt werden, gemäß bekannten Funkstandards einsetzbar ist.

Auf der Leiterplatte LP können auch die Peripheriegeräte P, SD, AZ angeordnet sein. Jedoch können Leiterplatte LP und Peripheriegeräte P, SD, AZ auch separate bauliche, aber verbundene Einheiten bilden (nicht dargestellt).

Der Basisbandchipkernmultiplexer BCKMUX ist über die Schnittstellenleitung ATSSL mit seinem Pendant, dem Steuergerätmultiplexer SGMUX, verbunden. Der Steuergerätmultiplexer SGMUX ist vorzugsweise Bestandteil eines Steuergeräts SG. Alternativ könnte der Steuergerätmultiplexer SGMUX auch als vom Steuergerät getrennte, aber mit dem Steuergerät verbundene bauliche Einheit ausgebildet sein.

Zwischen dem Basisbandchip BC und dem Steuergerät SG befindet sich die Schnittstelle ATSS.

Das erfindungsgemäße Zusammenwirken der genannten Einheiten funktioniert in folgender Weise:

Will der Modulintegrator die an den I2C Bus angeschlossene Anzeigeeinheit AZ funktionsfähig machen, so erzeugt das Steuergerät SG spezifizierte AT Kommandos im Steuergerät SG. Diese spezifizierten AT Kommandos werden durch den Steuergerätmultiplexer SGMUX über die Schnittstellenleitung ATSSL dem Basisbandchipkernmultiplexer BCKMUX und dann dem Basisbandchipkern BCK zugeführt. Die für den I2C Bus spezifizierten AT Kommandos sorgen zunächst dafür, dass der I2C Bus mit einer entsprechenden Parametrierung beispielsweise einer festgelegten Datenübertragungsrate, Datenbreite 7/8 Bit etc. geöffnet wird. In der Anzeigeeinheit AZ wird durch weitere spezifizierte Kommandos, welche vom Steuergerät SG eingegeben werden, die Anzeigeeinheit AZ dahingehend eingestellt, dass der Anzeigeeinheit mitgeteilt wird, welche Bildpunkte der Anzeigeeinheit AZ zur Darstellung von Informationen ansteuerbar sind, welcher Zeichensatz verwendet werden soll, ob farbig oder schwarzweiß dargestellt werden soll. Sollen keine Daten mehr an die Anzeigeeinheit AZ gesendet werden, werden spezifizierte AT Kommandos vom Steuergerät SG eingegeben, die ein Schließen des Datenkanals bzw. des I2C Bus bewirken.

Will der Modulintegrator die an den Serial Peripherical Interface Bus SPI angeschlossene Speicherkarte SD funktionsfähig machen, so erzeugt das Steuergerät SG spezifizierte AT Kommandos im Steuergerät SG. Diese spezifizierten AT Kommandos werden ebenfalls durch den Steuergerätmultiplexer SGMUX über die Schnittstellenleitung ATSSL dem Basisbandchipkernmultiplexer BCKMUX und dann dem Basisbandchipkern BCK zugeführt. Die für den Serial Peripherical Interface Bus SPI spezifizierten AT Kommandos sorgen zunächst dafür, dass der Serial Peripherical Interface Bus SPI geöffnet wird und anschließend Daten vom Steuergerät SG weiter zur Speicherkarte SD gelangen. In der Speicherkarte SD wird durch weitere spezifizierte Kommandos, welche vom Steuergerät erzeugt werden, die Speicherkarte SD dahingehend eingestellt, dass der Speicherkarte SD mitgeteilt wird, welche Speicherbereiche zuerst beschrieben werden und welche Datenübertragungsrate zur Übertragung von Daten zwischen Basisbandchipkern BCK und der Speicherkarte SD benutzt wird. Ist der Datenaustausch mit der Speicherkarte SD abgeschlossen, werden spezifizierte AT Kommandos vom Steuergerät SG erzeugt, die ein Schließen des Datenkanals bzw. Serial Peripherical Interface Bus SPI bewirken.

Die Schnittstellen zu den Peripheriegeräten P, SD, AZ werden also über AT Kommandos parametriert und es kann auf Lösungen, wie sie aus dem Stand der Technik bekannt sind, z.B. eventuell zusätzliche Peripheriecontroller am Steuergerät SG bzw. eigene vom Modulintegrator zu erstellende Programme zur Parametrierung des Datenkanals zwischen Basisbandchipkern BCK und Peripheriegerät P, SD, AZ verzichtet werden.

Noch deutlicher wird der Vorteil der Parametrierung über AT Kommandos, wenn sich der Modulintegrator kurzfristig umentscheidet, und eine andere Anzeigeeinheit AZ oder eine andere Speicherkarte SD anschließen möchte. Da alle Komponenten über AT Kommandos parametrierbar sind, lässt sich diese Umstellung in einfacher Weise erreichen und der Modulintegrator kann in flexibler Weise verschiedene Peripheriegeräte P, SD, AZ an verschiedene Bussysteme bzw. Datenleitungen L1, L2, USB, SPI, I2C anschließen.

Des Weiteren ermöglicht die erfindungsgemäße technische Lösung den Anschluss und die Parametrierung weiterer Peripheriegeräte an auf dem Basisbandchip BC vorgesehene Peripherieunterstützungseinheiten USBC, MP3C, SIMC mittels einer einheitlichen Kommandosprache, nämlich dem AT Befehlssatz.

Jedes Peripheriegerät P, SD, AZ und auch die Bussysteme SPI, I2C werden gemäß dem erfindungsgemäßen Konzept als Datenquelle bzw. Datensenke angesehen. Durch AT Kommandos wird ein Datenkanal zu den Peripheriegeräten P, SD, AZ geöffnet bzw. geschlossen und notwendige Parameter in den Peripheriegeräten P, SD, AZ gesetzt. Nach der Öffnung eines Datenkanals können Daten vom Steuergerät SG zu den Peripheriegeräten P, SD, AZ transparent übertragen werden. Die notwendigen Protokolle werden von einer Anwendung im Steuergerät SG umgesetzt.

Durch die Vorsehung des Basisbandchipkernmultiplexers BCKMUX und Steuergerätmultiplexers SGMUX können überflüssige physikalische Schnittstellenleitungen zwischen dem Steuergerät und dem Basisbandchipkern vermieden werden. Die beiden Multiplexer führen sendeseitig parallele Datenströme, die z.B. aus verschiedenen AT Kommandos für verschiedene Peripheriegeräte P, SD, AZ bestehen können, aus Nutzdaten, Audiodaten etc. zusammen, so dass diese über die serielle Schnittstellenleitung ATSSL übertragen werden können, und die beiden Multiplexer trennen empfangsseitig den seriellen Datenstrom, wobei Datenteilströmen den jeweils vorgesehenen Empfängern z.B. Peripheriegeräten P, SD, AZ oder dem Sendeempfänger SE zugeführt werden.

Mit dem beschriebenen Multiplexerkonzept können also in Zeiten, in denen keine AT Kommandos über die Schnittstellenleitung ATSSL übertragen werden, auch Nutzdaten über die Schnittstellenleitung ATSSL und dann zu einem entfernten Empfangsendgerät über den Sendeempfänger SE übertragen werden. Das Steuergerät SG öffnet also einen Kanal für eine z.B. leitungsvermittelte Datenverbindung.

Durch das Multiplexerkonzept lassen sich über eine physikalische Schnittstellenleitung ATSSL eine Vielzahl verschiedener logische Kanäle abbilden.

Die Daten werden in der Regel gemäß der in der ETSI GSM Spezifikation 07.10 vorgeschrieben Weise zwischen dem Steuergerät SG und dem Basisbandchipkern BCK übertragen. Die Schnittstelle ATSS ist als serielle asynchrone Schnittstelle ausgebildet. Es können verschiedenste Arten von Daten übertragen werden. Die Daten werden in Datenrahmen mit Start-Stop-Übertragung in acht Bit Sequenzen übertragen.

Alternativ zur Datenübertragung in diesem Multiplexerkonzept findet die Erfindung auch in einem weiteren Multiplexerkonzept Ihre Anwendung, bei dem ein neues Dienstmerkmal für den Multiplexer nach ETSI GSM Spezifikation 07.10 definiert wird. Neben AT Kommandokanälen sind mit Dienstmerkmalen auch Audiodaten spezifiziert. Hier ist eine Erweiterung der ETSI GSM Spezifikation 07.10 um das Dienstmerkmal Peripheriedaten zu spezifizieren.

Die Erfindung ist nicht auf das spezielle Ausführungsbeispiel beschränkt, sondern schließt auch nicht explizit offenbarte Abwandlungen mit ein, solange von dem Kern der Erfindung Gebrauch gemacht wird. Dieses gilt insbesondere, da dem Fachmann vielfältige Ausbildungen von Basisbandchips BCK, Sendeempfängern SE, Bussystemen SPI, I2C, USB, Peripheriegeräten P, SD, AZ, Steuergeräten SG und Multiplexern BCKMUX, SGMUX zur Realisierung der Erfindung bekannt sind. Insbesondere können die beschriebenen Leitungen und Bussysteme auch als Funkverbindungen ausgebildet sein.

## Patentansprüche

1. Basisbandchip (BC), umfassend einen Basisbandchipkern (BCK) und mit dem Basisbandchipkern (BCK) verbundene Peripherieunterstützungseinheiten (USBC, SDC, MP3C, AZC, SIMC) für Peripheriegeräte (P, SD, AZ), wobei der Basisbandchipkern (BCK) über eine Schnittstellenleitung (ATSSL) mit einem externen Steuergerät (SG) verbindbar ist,
**dadurch gekennzeichnet,**
**dass** der Basisbandchipkern (BCK) mit einem Basisbandchipkernmultiplexer (BCKMUX) verbunden ist, wobei der Basisbandchipkern (BCK) über den Basisbandchipkernmultiplexer (BCKMUX) über die Schnittstellenleitung (ATSSL) mit dem externen Steuergerät (SG) verbindbar ist, wobei, wenn der Basisbandchipkern (BCK) mit dem externen Steuergerät (SG) verbunden ist, eine Vielzahl von logischen Datenkanälen zwischen einem Steuergerätmultiplexer (SGMUX) des externen Steuergerätes (SG) und mit den Peripherieunterstützungseinheiten (SDC, AZC) verbundenen Peripheriegeräten (P, SD, AZ) über den Basisbandchip (BC) mittels spezifizierter AT Kommandos bildbar sind.

2. Basisbandchip (BC) nach Patentanspruch 1,
wobei der Basisbandchipkernmultiplexer (BCKMUX) von dem Basisbandchipkern (BCK) umfasst ist.

3. Kommunikationsmodul (M), umfassend einen Basisbandchip (BC) gemäß einem der vorstehenden Patentansprüche und einen mit dem Basisbandchipkern (BCK) verbundenen Sendeempfänger (SE), der ebenfalls mit dem Steuergerät (SG) über die Schnittstellenleitung (ATSSL) verbindbar ist.

4. Leiterplatte (LP), umfassend ein Kommunikationsmodul (M) gemäß Patentanspruch 3 und Peripheriegeräte (P, SD, AZ).

5. Leiterplatte (LP) nach Patentanspruch 4,
wobei ein Serial Peripherical Interface Bus (SPI) oder ein I2C Bus (I2C) als Datenleitungen zwischen den Peripherieunterstützungseinheiten (USBC, SDC, MP3C, AZC, SIMC) und den Peripheriegeräten (P, SD, AZ) ausgebildet sind.

6. Leiterplatte (LP) nach einem der vorstehenden Patentansprüche 4 oder 5,
wobei eines oder mehrere Peripheriegeräte (P, SD, AZ) als SD Memory Cards (SD) ausgebildet sind.

7. Leiterplatte (LP) nach einem der Patentansprüche 4 bis 6,
wobei ein Peripheriegerät (P, SD, AZ) als Anzeigeeinheit (AZ) ausgebildet ist.

8. Verfahren zur Ansteuerung von Peripheriegeräten (P, SD, AZ) durch ein Steuergerät (SG), wobei das Steuergerät über eine Schnittstellenleitung (ATSSL) mit einem Basisbandchipkern (BCK) verbunden ist, wobei der Basisbandchipkern (BCK) auf einem Basisbandchip (BC) mit Peripherieunterstützungseinheiten (USBC, SDC, MP3C, AZC, SIMC) verbunden ist und wobei Peripheriegeräte (P, SD, AZ) über Datenleitungen (SPI, I2C, USB, L1, L2) mit den zugeordneten Peripherieunterstützungseinheiten (USBC, SDC, MP3C, AZC, SIMC) verbunden sind, **dadurch gekennzeichnet, dass** zwischen den Peripheriegeräten (P, SD, AZ) und dem Steuergerät (SG) ein Datenkanal mittels spezifizierter AT Kommandos über den Basisbandchip (BC) gebildet wird, wodurch das Steuergerät (SG) unmittelbaren Zugriff auf die Peripheriegeräte (P, SD, AZ) erhält.

9. Verfahren nach Patentanspruch 8,
**dadurch gekennzeichnet,**
**dass** der Basisbandchipkern (BCK) mit einem Basisbandchipkernmultiplexer (BCKMUX) verbunden ist und der Basisbandchipkernmultiplexer (BCKMUX) über die Schnittstellenleitung (ATSSL) mit einem Steuergerätmultiplexer (SGMUX) verbunden wird, wobei der Steuergerätmultiplexer (SGMUX) mit dem Steuergerät (SG) verbunden ist.

10. Verfahren nach Patentanspruch 9,
**dadurch gekennzeichnet,**
**dass** eine Vielzahl von logischen Datenkanälen zwischen dem Steuergerätmultiplexer (SGMUX) und verbundenen Peripheriegeräten (P, SD, AZ) über die Schnittstellenleitung (ATSSL) mittels AT Kommandos gebildet werden.

11. Verfahren nach einem der vorstehenden Patentansprüche 8 bis 10, **dadurch gekennzeichnet,**
**dass** die zwischen dem Steuergerät (SG) und dem Basisbandchipkern (BCK) übertragenen Daten in Datenrahmen übertragen werden.

12. Verfahren nach einem der vorstehenden Patentansprüche 8 bis 11, **dadurch gekennzeichnet,**
**dass** die Datenrahmen ein Datenfeld umfassen, welches die übertragenen Daten als Peripheriedaten kennzeichnet.

## Claims

1. Baseband chip (BC) comprising a baseband chip core (BCK) and peripheral assistance units (USBC, SDC, MP3C, AZC, SIMC) which are connected to the baseband chip core (BCK) and are intended for peripheral devices (P, SD, AZ), the baseband chip core (BCK) being able to be connected to an external control device (SG) via an interface line (ATSSL),
**characterized in that**
the baseband chip core (BCK) is connected to a baseband chip core multiplexer (BCKMUX), the baseband chip core (BCK) being able to be connected to the external control device (SG) via the baseband chip core multiplexer (BCKMUX) and via the interface line (ATSSL), in which case, when the baseband chip core (BCK) is connected to the external control device (SG), a multiplicity of logical data channels can be formed between a control device multiplexer (SGMUX) of the external control device (SG) and peripheral devices (P, SD, AZ), which are connected to the peripheral assistance units (SDC, AZC), via the baseband chip (BC) using specified AT commands.

2. Baseband chip (BC) according to Patent Claim 1,
the baseband chip core multiplexer (BCKMUX) being included in the baseband chip core (BCK).

3. Communication module (M) comprising a baseband chip (BC) according to one of the preceding patent claims and a transceiver (SE) which is connected to the baseband chip core (BCK) and can likewise be connected to the control device (SG) via the interface line (ATSSL).

4. Printed circuit board (LP) comprising a communication module (M) according to Patent Claim 3 and peripheral devices (P, SD, AZ).

5. Printed circuit board (LP) according to Patent Claim 4, a serial peripheral interface bus (SPI) or an I2C bus (I2C) being formed as data lines between the peripheral assistance units (USBC, SDC, MP3C, AZC, SIMC) and the peripheral devices (P, SD, AZ).

6. Printed circuit board (LP) according to either of the preceding Patent Claims 4 and 5,
one or more peripheral devices (P, SD, AZ) being in the form of SD memory cards (SD).

7. Printed circuit board (LP) according to one of Patent Claims 4 to 6,
a peripheral device (P, SD, AZ) being in the form of a display unit (AZ).

8. Method for controlling peripheral devices (P, SD, AZ) by means of a control device (SG), the control device being connected to a baseband chip core (BCK) via an interface line (ATSSL), the baseband chip core (BCK) on a baseband chip (BC) being connected to peripheral assistance units (USBC, SDC, MP3C, AZC, SIMC), and peripheral devices (P, SD, AZ) being connected to the associated peripheral assistance units (USBC, SDC, MP3C, AZC, SIMC) via data lines (SPI, I2C, USB, L1, L2), **characterized in that** a data channel is formed between the peripheral devices (P, SD, AZ) and the control device (SG) via the baseband chip (BC) using specified AT commands, as a result of which the control device (SG) receives direct access to the peripheral devices (P, SD, AZ).

9. Method according to Patent Claim 8,
**characterized in that**
the baseband chip core (BCK) is connected to a baseband chip core multiplexer (BCKMUX) and the baseband chip core multiplexer (BCKMUX) is connected to a control device multiplexer (SGMUX) via the interface line (ATSSL), the control device multiplexer (SGMUX) being connected to the control device (SG).

10. Method according to Patent Claim 9,
**characterized in that**
a multiplicity of logical data channels are formed between the control device multiplexer (SGMUX) and connected peripheral devices (P, SD, AZ) via the interface line (ATSSL) using AT commands.

11. Method according to one of the preceding Patent Claims 8 to 10, **characterized in that**
the data transmitted between the control device (SG) and the baseband chip core (BCK) are transmitted in data frames.

12. Method according to one of the preceding Patent Claims 8 to 11, **characterized in that**
the data frames comprise a data field which identifies the transmitted data as peripheral data.

## Revendications

1. Puce en bande de base ( BC ), comprenant un noyau de puce en bande de base ( BCK ) et des unités de support de périphériques ( USBC, SDC, MP3C, AZC, SIMC ) destinées à des appareils périphériques ( P, SD, AZ ) et reliées au noyau de puce en bande de base ( BCK ), le noyau de puce en bande de base ( BCK ) pouvant être relié à un appareil de commande externe ( SG ) par l'intermédiaire d'une ligne d'interface ( ATSSL ),
**caractérisée par le fait que**
le noyau de puce en bande de base ( BCK ) est relié à un multiplexeur de noyau de puce en bande de base ( BCKMUX ), le noyau de puce en bande de base ( BCK ) pouvant être relié à l'appareil de commande externe ( SG ) par l'intermédiaire du multiplexeur de noyau de puce en bande de base ( BCKMUX ) et de la ligne d'interface ( ATSSL ) et, lorsque le noyau de puce en bande de base ( BCK ) est relié à l'appareil de commande externe ( SG ), plusieurs canaux de données logiques pouvant être formés par l'intermédiaire de la puce en bande de base ( BC ) entre un multiplexeur d'appareil de commande ( SGMUX ) de l'appareil de commande externe ( SG ) et des appareils périphériques ( P, SD, AZ ) reliés aux unités de support de périphériques ( SDC, AZC ) au moyen de commandes AT spécifiées.

2. Puce en bande de base ( BC ) selon la revendication 1, le multiplexeur de noyau de puce en bande de base ( BCKMUX ) étant compris dans le noyau de puce en bande de base ( BCK ).

3. Module de communication ( M ), comprenant une puce en bande de base ( BC ) selon l'une des revendications précédentes et un émetteur-récepteur ( SE ) qui est relié au noyau de puce en bande de base ( BCK ) et qui peut également être relié à l'appareil de commande ( SG ) par l'intermédiaire de la ligne d'interface ( ATSSL ).

4. Carte de circuits imprimés ( LP ), comprenant un module de communication ( M ) selon la revendication 3 et des appareils périphériques ( P, SD, AZ ).

5. Carte de circuits imprimés ( LP ) selon la revendication 4, un bus appelé Serial Peripherical Interface Bus ( SPI ) ou un bus du type I2C ( I2C ) étant prévu comme lignes de données entre les unités de support de périphériques ( USBC, SDC, MP3C, AZC, SIMC ) et les appareils périphériques ( P, SD, AZ ).

6. Carte de circuits imprimés ( LP ) selon l'une des revendications précédentes 4 ou 5, l'un ou plusieurs des appareils périphériques ( P, SD, AZ ) étant prévus comme SD Memory Cards ( SD ).

7. Carte de circuits imprimés ( LP ) selon l'une des revendications précédentes 4 à 6, un appareil périphérique ( P, SD, AZ ) étant prévu comme unité d'affichage ( AZ ).

8. Procédé pour la commande d'appareils périphériques ( P, SD, AZ ) par un appareil de commande ( SG ), l'appareil de commande étant relié à un noyau de puce en bande de base ( BCK ) par l'intermédiaire d'une ligne d'interface ( ATSSL ), le noyau de puce en bande de base ( BCK ) étant relié sur une puce en bande de base ( BC ) à des unités de support de périphériques ( USBC, SDC, MP3C, AZC, SIMC ) et des appareils périphériques ( P, SD, AZ ) étant reliés aux unités de support de périphériques associées ( USBC, SDC, MP3C, AZC, SIMC ) par l'intermédiaire de lignes de données ( SPI, I2C, USB, L1, L2 ), **caractérisé par le fait qu'**un canal de données est formé par l'intermédiaire de la puce en bande de base ( BC ) entre les appareils périphériques ( P, SD, AZ ) et l'appareil de commande ( SG ) au moyen de commandes AT spécifiées, l'appareil de commande ( SG ) ayant ainsi un accès direct aux appareils périphériques ( P, SD, AZ ).

9. Procédé selon la revendication 8,
**caractérisé par le fait que**
le noyau de puce en bande de base ( BCK ) est relié à un multiplexeur de noyau de puce en bande de base ( BCKMUX ) et que le multiplexeur de noyau de puce en bande de base ( BCKMUX ) est relié à un multiplexeur d'appareil de commande ( SGMUX ) par l'intermédiaire de la ligne d'interface ( ATSSL ), le multiplexeur d'appareil de commande ( SGMUX ) étant relié à l'appareil de commande ( SG ).

10. Procédé selon la revendication 9,
**caractérisé par le fait que**
plusieurs canaux de données logiques sont formés entre le multiplexeur d'appareil de commande ( SGMUX ) et des appareils périphériques reliés ( P, SD, AZ ) par l'intermédiaire de la ligne d'interface ( ATSSL ) et au moyen de commandes AT.

11. Procédé selon l'une des revendications précédentes 8 à 10,
**caractérisé par le fait que**
les données transmises entre l'appareil de commande ( SG ) et le noyau de puce en bande de base ( BCK ) sont transmises dans des trames de données.

12. Procédé selon l'une des revendications précédentes 8 à 11,
**caractérisé par le fait que**
les trames de données comprennent un champ de données qui caractérise les données transmises comme données de périphériques.
